Europäisches Patentamt

European Patent Office

Office européen des brevets

(11) Publication number: **0 053 399**
**B1**

(12) **EUROPEAN PATENT SPECIFICATION**

(45) Date of publication of patent specification: **16.04.86**

(21) Application number: **81110084.1**

(22) Date of filing: **02.12.81**

(51) Int. Cl.⁴: **H 04 B 7/185**

(54) Method of and system for satellite-switched time-division multiple access.

(30) Priority: **03.12.80 IT 6884080**

(43) Date of publication of application:
**09.06.82 Bulletin 82/23**

(45) Publication of the grant of the patent:
**16.04.86 Bulletin 86/16**

(84) Designated Contracting States:
**DE FR GB NL**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Alaria, Gian Battista**
**C.so Turati, 3**
**Turin (IT)**
Inventor: **Preti, Roberto**
**Via Sappone, 11**
**Turin (IT)**

(74) Representative: **Riederer Freiherr von Paar zu Schönau, Anton et al**
**Freyung 615 Postfach 2664**
**D-8300 Landshut (DE)**

(56) References cited:
EP-A-0 037 458
DE-A-2 164 016
US-A-3 806 879

IEEE TRANSACTIONS ON COMMUNICATIONS, vol. COM-28, no. 8, August 1980, NEW YORK (US), C.R. CARTER: "Survey of synchronization techniques for a TDMA satellite-switched system", pages 1291-1301

The file contains technical information submitted after the application was filed and not included in this specification

(56) References cited:
PROCEEDINGS OF IEEE, vol. 65, no. 3, March 1977, LONDON (GB), YASUHIKO et al.: "Analysis of a switch matrix for an SS/TDMA system", pages 411-419

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 053 399 B1

# Description

The present invention relates to digital transmissions via satellite with switching stage on board and time division multiple access (SS/TDMA) and more particularly it concerns a method of and a system for accessing a telecommunications satellite, particularly suited to earth stations with a multiplicity of traffic relations, though each can have low traffic volume.

The characteristics of TDMA terminals present at the earth stations designed for satellite links are internationally specified by the most important space authorities, such as Intelsat and Eutelsat.

On the contrary, precise specifications relating to SS/TDMA equipments have not yet been defined. In particular, the time corresponding to the shortest switching unit on board the satellite, the frame unit, is to be determined.

A value corresponding to thirty DSI channels (Digital Speech Interpolation), namely sixty telephone circuits, is an acceptable digital-sequence length. By this value, the frame efficiency, given by the ratio between the utilized frame portion and the frame itself, is not too much lowered.

Moreover such switching-time value is homogeneous with 2 Mbit/s PCM (Pulse Code Modulation) transmission systems, composed of thirty 64 kbit/s channels for the speech, one for the signalling and one for the synchronism.

However a minimum frame unit of sixty circuits is not suited to a system with many relations with low traffic volume.

Similarly, traffic towards the different earth stations ought to be grouped with a minimum modularity of thirty 2 Mbit/s channels.

As a consequence, the frame unit is badly exploited and the satellite available time is misused.

These drawbacks may be overcome by the method of and the system for satellite-switched time-division multiple access provided by the present invention, which allow a better exploitation of the frame units by earth stations with low traffic volume and do not require modifications to TDMA terminals, but only the addition of an apparatus outside the terminal and of an apparatus on board the satellite.

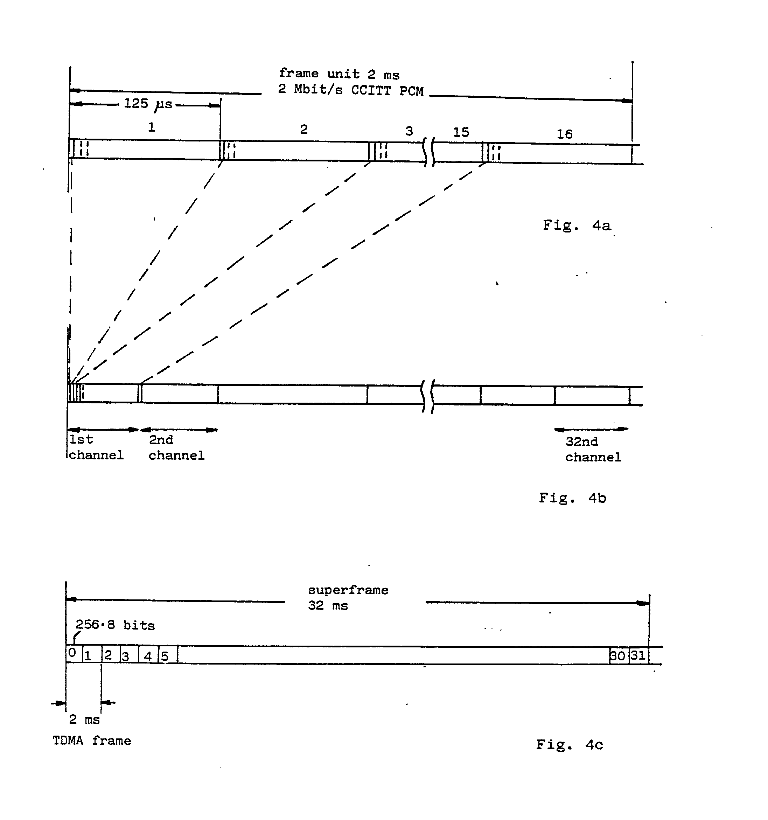

The present invention provides a method of satellite-switched time-division multiple access ("TDMA") for the traffic via a satellite (SA) among earth stations (STA, STB) with many traffic relations, though each can have low traffic volume, the earth stations comprising transmitting TDMA terminals (TDMA$_T$) capable of receiving streams of PCM-encoded samples (on 1, 2) organized in PCM-frames each PCM-frame occurring during a time period of 125 μs and containing 32 channels, of converting these streams of samples into a stream of 2 ms-TDMA-frames by re-organizing the channels present in 16 such consecutive PCM-frames taking 2 ms such that the samples of the channels of consecutive frames within said time period of 2 ms become arranged as a contiguous block containing the respective channel only, so as to generate the 2 ms-TDMA-frames which are each associated to one traffic relation and are used for the upward transmission link (9) to the satellite, and further comprising receiving TDMA terminals (TDMA$_R$) capable of processings complementary to those carried out by the transmitting TDMA terminals, the satellite receiving the upward transmission links (9, 11, 12) from the transmitting TDMA stations, switching the channels by means of a switching matrix (SW) and transmitting downward transmission links (10, 13, 14) toward the receiving TDMA terminals, characterized in that from all or some of the streams of PCM-encoded samples (on 3), prior to supplying them to the respective transmitting TDMA terminal (TDMA$_T$), a TDMA superframe (Fig. 4c) is built up to comprise the samples of the PCM frames contained in a number n=32, 16, 8, 4 or 2 of 2 ms-frames corresponding to the TDMA-frames, each of the 2 ms-frames within the superframe is built with groupings made of 32/n channels each having n · 16 PCM samples, said superframe being built up by re-ordering the samples of n · 16 PCM-frames by subsequent operations of temporary memorizing and reading (in M1, M2), followed by a multiplexing operation (in MX1); characterized also in that the switching matrix (SW) on board the satellite is addressed at a repetition period equal to the superframe duration; and finally characterized in that, in order to recover PCM streams, said groupings of channels at the output of the receiving TDMA terminal (TDMA$_R$) are reordered by subsequent operations of temporary memorizing and reading (in M3, M4), followed by a multiplexing operation (in MX2).

The present invention also provides a system, operating according to this method.

These and other preferred features of the present invention will become clearer from the following description of a preferred embodiment given by way of example and not in a limiting sense, and illustrated with reference to the accompanying drawings wherein:

— Fig. 1 is a general block diagram of the satellite telecommunications system;
— Fig. 2 is a block diagram of the unit added to the TDMA terminal;
— Fig. 3 is a block diagram of the apparatuses to be installed on board the satellite;
— Fig. 4 is a scheme of information flows for illustrating re-ordering of the time slots, Figs. 4a and b showing the conventional re-ordering and Fig. 4c illustrating the invention.

It is well known that at a TDMA earth station a 2Mbit/s PCM stream is to undergo various operations before being utilized to modulate the phase of the radio frequency carrier used for the transmission to the satellite. More particularly, in a determined time interval, e.g. 2 ms, sixteen 8-bit samples of each channel are grouped together in orderly sequence. The resulting channels, composed of 128 bit per 2 ms frames, are converted to a higher speed and combined with other PCM streams by a multiplexing operation, thus obtaining the normalized TDMA frame. In that frame also synchronism and signalling data are reorganized according to the international standards. Assembling a conventional TDMA frame is known e.g. from DE—A—21 64 016 where it is termed "Überrahmen" (superframe).

More particularly, in the SS/TDMA system every frame unit, composed of 30 channels, comprises 16 8-bit samples of every channel and presents a period of 2 ms. All 30 channels of a frame unit come from a single earth station and are directed towards another earth station. The standard re-ordering of samples, carried out every 2 ms in the TDMA terminal, is represented in Fig. 4a—b.

In order to improve the frame efficiency for traffic stations with few channels per frame unit, the samples of 2 Mbit/s PCM frame entering the terminal are previously reordered according to the method provided by this invention.

Considering a 32 ms time period, corresponding to 256 PCM frames, the 512 samples of two consecutive channels are ordered in pairs of 16 sample blocks, by alternating the two channels. Then the samples relating to the following pairs are ordered, to the channel completion.

By presenting a binary stream modified in this way at TDMA terminal input, particular frame units can be obtained wherein there are PCM samples of channel pairs. Hence, a superframe is originated, with a repetition period equal to sixteen TDMA frames, wherein a sequence of frame units with samples of pairs of subsequent channels can be found: channels 1, 2; 3, 4; . . . . ; 14, 16, . . . ; 30, 31.

In this example a superframe has been chosen composed of sixteen TDMA frames, which entails the channels to be grouped in pairs; however by accepting either a frame having a length of thirty two TDMA frames or a frame composed of less than sixteen TDMA frames, the frame units will have samples of a single channel or samples of 4-, or 8-, or 16- channel groups, with the superframes composed of 8-, or 4-, or 2-TDMA frames.

Thus, according to the invention for n=16, the TDMA terminal builds a super frame composed of 16 2ms-frames and makes available very 2 ms all the samples of 2 successive channels. As a consequence of the sample re-ordering, TDMA frames, composed of 256 samples of a channel and of 256 samples of another one, are generated as 2-ms-units.

The 30 channels of a 2 Mbit/s PCM are therefore ordered by TDMA terminal as shown in Fig. 4c. After this operation, every frame presents 2 channels that can be switched in a wanted direction and every superframe presents 16 groups of 2 channels that can be switched two by two in different directions, individually or by groups. This switching operation is carried out on board the satellite.

Therefore a stream of digital sequences organized in the above—described superframe is present at the terminal output. Said sequence and sequences organized in a conventional way can coexist.

As mentioned, the minimum frame unit comprises a number of channels in function of the superframe length. It is obvious that if a station needs in this superframe a multiplicity of channels, it uses a multiple of the number of channels contained in the frame unit.

To implement this SS/TDMA method, apparatuses must be added both on board the satellite and at the earth station, preventing modifications to the already existing TDMA terminals. Therefore, at the earth station a device is needed capable of operating on PCM streams entering the terminal, whilst on board the satellite additional devices must be added to obtain a different operating modality of the switching device.

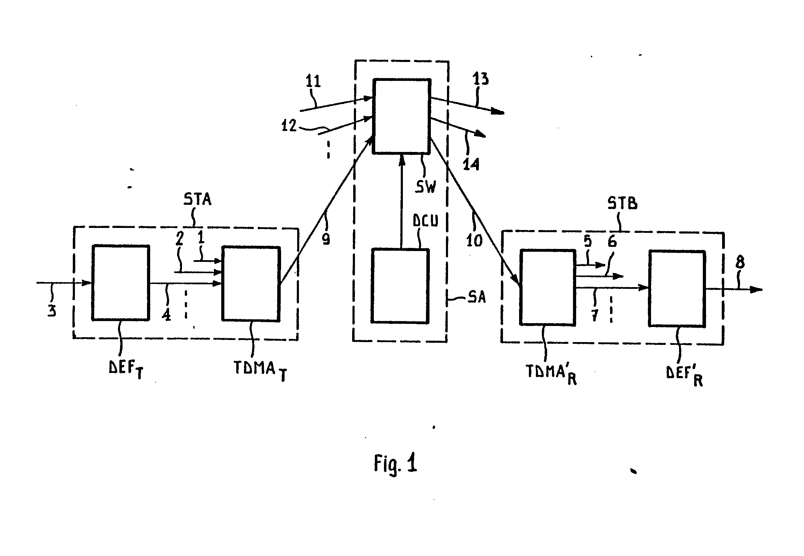

The general system block diagram, consisting of an earth station and of a satellite is represented in Fig. 1.

This block diagram shows PCM streams at 2 Mbit/s accessing via wires 1 and 2 the transmit ends $TDMA_T$ of a first terminal and through wire 3 the device denoted in Fig. 1 by $DEF_T$, which effects the reorganization of the PCM samples according to the invention.

Such devices can be as many as are the accesses to the terminal. At the output of device $DEF_T$, after the reorganization, reorganized PCM samples access via wire 4 the terminal, where they are handled as usual PCM streams.

Reference 9 denotes the radiofrequency uplink between the terminal transmit side, belonging to a first station STA, and the satellite SA. The drawing shows only the switching matrix SW and its control unit DCU. The devices for the transmission and reception of radiofrequency signals, or for their base-band conversion, are not represented as they are not within the scope of the invention. As to the matrix SW, it can be indifferently of the kind capable of switching baseband or radiofrequency signals, according to whether the satellite repeater is of the generative type or not.

The control unit DCU, which will be described hereinafter controls the addressing of the matrix SW with the modalities required by the device $DEF_T$.

References 11 and 12 denote other radiofrequency uplinks coming from other terminals, possibly equipped with devices of the $DEF_T$ type.

References 10, 13 and 14 denote three radiofrequency downlinks. Link 10 accesses the $TDMA'_R$ receive side of a second TDMA terminal, belonging to the earth station STB, wherefrom streams with standard PCM frame are extracted on connections 5 and 6, while on connection 7 there is extracted a stream which, duly ordered by the device $DEF'_R$, reappears as a 2 Mbit/s standard PCM stream on connection 8. Downlinks 13 and 14 access other terminals, possibly equipped with devices of the $DEF'_R$ type.

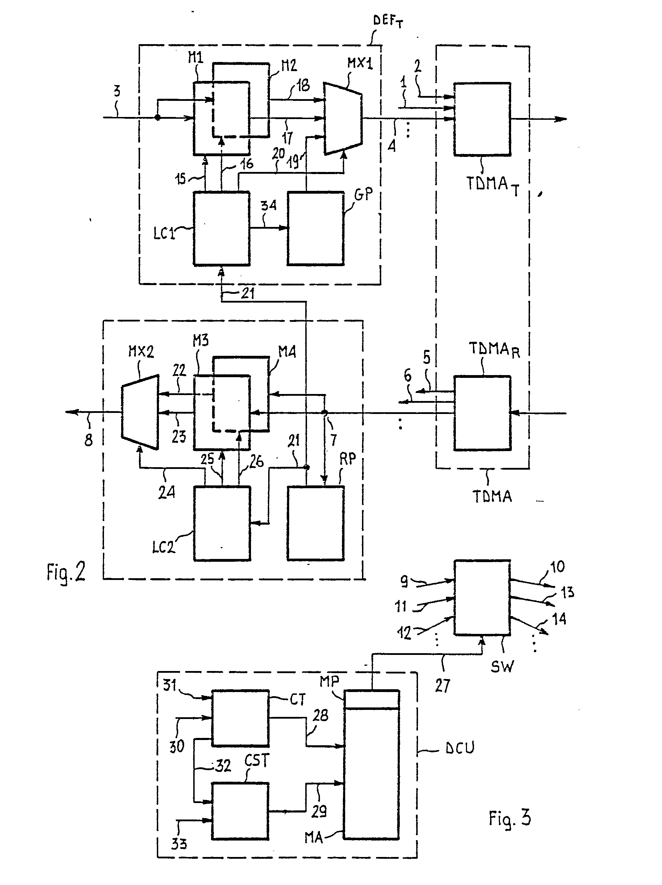

Fig. 2 shows the block diagram of the device apt to reorganize the PCM streams at TDMA terminal.

In this case the TDMA$_T$ transmit side and TDMA$_R$ receive side belong to a single terminal located at an earth station.

On connection 3, analogously to the previous Figure, there are PCM streams coming from stations with low traffic volume. Said streams access the DEF$_T$ transmit side of the device for reorganizing the samples and more particularly the writing inputs of two memories M1 and M2. Their storage capacity is sufficient to contain the samples of all the channels for a whole superframe.

Said memories are controlled by a control logic LCl, which through connections 15 and 16, causes one memory to be written and the other to be read for a superframe duration, and vice versa in the subsequent superframe. During the writing step, all the PCM samples of all the thirty-two channels are memorized in the time of a superframe, whilst during the reading step the written samples are read according to the modalities of the previously described method. To do so control logic LCl operates according to a simple recorded program. The streams outgoing from the memories are transferred through connection 17 and 18 to a multiplexer MX1, controlled by logic LC1 through connection 20, by which multiplexer they are combined in time to produce a single stream. A suitable bit packet, supplied by generator GP and sent to multiplexer MX1 through connection 19, is also inserted in said stream. The function of said packet will be expounded hereinafter.

Control logic LC1 is accessed by connection 21, which carries the information of superframe synchronism obtained from the receive side of the sample reorganizing device DEF$_R$.

The stream at MX1 output on wire 4, along with other streams rearranged according to the present method or standard PCM streams present on wires 1 and 2, arrives at the terminal transmit side TDMA$_T$.

The stream relating to low-traffic stations, sent towards earth from the satellite, is present at the terminal receive side, on wire 7. Said stream is written in and read from two memories M3 and M4 according to modalities complementary to that used for memories M1 and M2. Addresses and enablings to the diverse operations are supplied by a second control logic LC2 through connections 25 and 26.

The streams at the outputs of memories M3 and M4, on connections 22 and 23, are combined into a single stream by a second multiplexer MX2, controlled by control logic LC2 through connection 24. At MX2 output on connection 8 a standard PCM stream at 2 Mbit/s is available again.

Superframe synchronism information for control logic LC2 is supplied on connection 21 by a sequence detector RP, which operates on the received stream present on wire 7.

The apparatuses to be installed on board the satellite are shown along with a part of preexistent apparatuses in the block diagram of Fig. 3.

The switching matrix SW, with its incoming streams on connections 9, 11 and 12, and outgoing ones on connections 10, 13 and 14, is controlled through connection 27 by an addressing memory MP and by an additional memory MA.

Memory MP, which controls the addressing of the frame units inside the frame, is the part of the memory used in the latest satellite switching units. MP addressing is effected through connection 28 by a counter CT.

CT is timed by a frame synchronism signal generated on board the satellite and present on connection 31 and it increments the address number on the basis of a clock signal, of a duration corresponding to a frame unit, present on connection 30.

Additional memory MA controls the addressing of the frame units inside the superframe. To do so it needs as many memory blocks, as large as memory MP, as are the frames contained in the superframe. MA addressing is effected by a superframe counter CST through connection 29. CST receives through connection 33 the synchronism signal generated on board the satellite and through connection 32 coming from CT a clock signal, equal to a frame time, for its increment.

As the number of frame units requiring special handling (superframe) is not equal to the totality, by simple circuit modifications the capacity of additional memory MA, needed to obtain that new addressing method, can be highly reduced.

The addressing plan of the switching matrix is written inside memories MP and MA; said plan has been determined at the beginning of the satellite operation and can be changed at any moment depending on traffic requirements. Both memories are cyclically read at each frame and at each superframe.

An important feature of the SS/TDMA method relates to superframe synchronisation; to obtain that, an earth station must be capable of recognizing the exact transmission instant of the frame units belonging to the superframe, so that the transmission towards another station may be correctly effected.

According to the present way of embodiment this problem is solved in the following way.

A counter, denoted by CST in Fig. 3, is placed on board the satellite to form the superframe by generating suitable addresses for the memories designed to address the switching matrix. The earth stations use the well-known closed—loop technique to get synchronized on that superframe. Namely one of the frame units, the so-called synchronization window, is switched towards the same station it came from.

By sending a determined bit packet, the station gets synchronized when it receives in the appropriate time phase of the superframe the whole packet it had sent.

Automatic systems capable of correcting phase errors inside ths superframe are now provided in these cases. After that initial synchronization, the earth station knows the exact transmission instant of the frame units inside the superframe.

The synchronization packet is produced by a suitable generator, denoted by GP in Fig. 2, and is inserted into the stream on connection 4 by means of multiplexer MX1, at which it arrives through connection 19. Obviously that is effected by using a frame unit.

At the receive side, the sequence detector RP detects the synchronization packet in the stream on connection 7 and supplies a signal with synchronism functions on connection 21 for control logics LC1 and LC2. More particularly logic LC1 controls the exact instants for the transmission of the synchronization packet through connection 34.

## Claims

1. Method of satellite-switched time-division multiple access ("TDMA") for the traffic via a satellite (SA) among earth stations (STA, STB) with many traffic relations, though each can have low traffic volume, the earth stations comprising transmitting TDMA terminals (TDMA$_T$) capable of receiving streams of PCM-encoded samples (on 1, 2) organized in PCM-frames each PCM-frame occurring during a time period of 125 μs and containing 32 channels, of converting these streams of samples into a stream of 2 ms-TDMA-frames by re-organizing the channels present in 16 such consecutive PCM-frames taking 2 ms such that the samples of the channels of consecutive frames within said time period of 2 ms become arranged as a contiguous block containing the respective channel only, so as to generate the 2 ms-TDMA-frames which are each associated to one traffic relation and are used for the upward transmission link (9) to the satellite, and further comprising receiving TDMA terminals (TDMA$_R$) capable of processings complementary to those carried out by the transmitting TDMA terminals, the satellite receiving the upward transmission links (9, 11, 12) from the transmitting TDMA' stations, switching the channels by means of a switching matrix (SW) and transmitting downward transmission links (10, 13, 14) toward the receiving TDMA terminals, characterized in that from all or some of the streams of PCM-encoded samples (on 3), prior to supplying them to the respective transmitting TDMA terminal (TDMA$_T$), a TDMA superframe (Fig. 4c) is built up to comprise the samples of the PCM frames contained in a number n=32, 16, 8, 4 or 2 of 2 ms-frames corresponding to the TDMA-frames, each of the 2 ms-frames within the superframe is built with groupings made of 32/n channels each having n · 16 PCM samples, said superframe being built up by re-ordering the samples of n · 16 PCM-frames by subsequent operations of temporary memorizing and reading (in M1, M2), followed by a multiplexing operation (in MX1); characterized also in that the switching matrix (SW) on board the satellite is addressed at a repetition period equal to the superframe duration; and finally characterized in that, in order to recover PCM streams, said groupings of channels at the output of the receiving TDMA terminal (TDMA$_R$) are reordered by subsequent operations of temporary memorizing and reading (in M3, M4), followed by a multiplexing operation (in MX2).

2. Method according to claim 1, characterized in that in order to determine the exact transmission instant a suitable binary packet (from GP) is inserted by said multiplexing operation (in MX1) into the binary stream at the input (4) of the transmitting TDMA terminal (TDMA$_T$) by using a frame unit and is switched towards the emitting station (TDMA$_T$).

3. System for carrying out the method according to claim 1 or 2, comprising a satellite (SA) and a plurality of earth stations (STA, STB) communicating with the satellite by TDMA transmission links (9—14), the satellite comprising a switching matrix for switching channels to be connected, the earth stations comprising transmitting and receiving TDMA earth terminals (TDMA$_T$, TDMA$_R$), the transmitting earth terminals being designed to receive streams of PCM-encoded samples (on 1, 2) organized in PCM frames which it converts into differently ordered streams of samples wherein the samples of each frame, belonging to a determined period, are gathered to contiguous blocks within a TDMA frame, and the receiving earth terminals being designed to carry out a complementary conversion, characterized in that at the earth stations (STA, STB) there are provided a plurality of first memory devices (M1, M2), capable of memorizing the samples of a PCM incoming stream and of supplying them at suitable instants, upon command of a first control logic (LC1), to a first multiplexer (MX1) which delivers at its output a first binary stream to be sent along with standard PCM streams to the input (4) of the transmitting TDMA terminal (TDMA$_T$), a plurality of second memory devices (M3, M4) being also provided for memorizing the samples of a second binary stream present at the output (5, 6, 7) of the receiving TDMA terminal (TDMA$_R$) and for supplying them at suitable instants, upon command of a second control logic (LC2), to a second multiplexer (MX2) which delivers at its output an outgoing PCM stream, the first control logic (LC1) being capable of getting these first memory devices (M1, M2) read and written alternatively and with modalities complementary to those used by the second control logic (LC2) to command the reading and writing in said second memory devices (M3, M4).

4. System according to claim 3, characterized in that at the earth station (STA, STB) there are provided a sequence generator (GP), capable of supplying said first multiplexer (MX1) with a suitable binary packet to be introduced in said first binary stream, and a detector (RP) of said packet, said detector being capable of extracting this binary packet from said second binary stream (on 7), so as to acknowledge the reached superframe synchronism between satellite and earth-station timing.

5. System according to claims 3 or 4, characterized in that on board the satellite there are provided additional addressing memory devices (MA) for addressing the switching matrix (SW) with a repetition period equal to that of the superframe, which devices are controlled by a superframe counter (CST) clocked by a signal wihh a period equal to the frame time and synchronized by a synchronism signal, both these signals being generated on board the satellite.

**Patentansprüche**

1. Verfahren zum satellitengeschalteten zeitgeteilten Mehrfachzugriff (TDMA) für den über einen Satelliten (SA) verlaufenden Verkehr zwischen Erdstationen (STA, STB) mit vielen Verkehrsverbindungen, von denen die einzelnen auch ein niedriges Verkehrsvolumen aufweisen können, wobei die Erdstationen sendende TDMA-Endstellen (TDMA$_T$) aufweisen, die Ströme von PCM-kodierten Abtastwerten (auf 1, 2) empfangen können, welche in PCM-Rahmen organisiert sind, von denen jeder während einer Zeitspanne von 125 µs auftritt und 32 Kanäle umfaßt, und die diese Ströme von Abtastwerten in einen Strom von 2ms-TDMA-Rahmen durch Reorganisation der in 16 solchen aufeinanderfolgenden PCM-Rahmen vorhandenen Kanäle, die zwei ms dauern, so umwandeln können, daß die Abtastwerte der Kanäle aufeinanderfolgender Rahmen innerhalb der Zeitspanne von 2 ms als zusammenhängender Block angeordnet werden, der nur den betreffenden Kanal enthält, so daß die 2ms-TDMA-Rahmen erzeugt werden, die jeweils nur einer Verkehrsverbindung zugeordnet sind und für die aufwärtsgerichtete Sendeverbindung zum Satelliten verwendet werden, und wobei die Erdstationen weiterhin empfangende TDMA-Endstellen (TDMA$_R$) aufweisen, die den von den sendenden TDMA-Endstellen durch-geführten Verarbeitungen komplementäre Ver-arbeitungen durchführen können, und der Satellit die aufwärtsgerichteten Sendeverbindungen (9, 11, 12) von den sendenden TDMA-Stationen empfängt, die Kanäle mit Hilfe einer Schaltmatrix (SW) schaltet und abwärtsgerichtete Sendeverbindungen (10, 13, 14) zu den empfangenen TDMA-Endstellen sendet, dadurch gekennzeichnet, daß von allen oder einigen der Ströme PCM-kodierter Abtastwerte (auf 3) vor deren Einspeisung in die betreffende sendende TDMA-Endstelle (TDMA$_T$) ein TDMA-Überrahmen (Fig. 4c) aufgebaut wird, der die Abtastwerte der PCM-Rahmen enthält, die in einer Anzahl n=32, 16, 8, 4 oder 2 von den TDMA-Rahmen entsprechenden 2ms-Rahmen enthalten sind, daß jeder der 2ms-Rahmen innerhalb des Überrahmens mit Gruppen von 32/n Kanälen, die jeweils n 16 PCM-Abtastwerte enthalten, aufgebaut ist, wobei der Überrahmen durch Neuordnung der Abtastwerte von n 16 PCM-Rahmen durch aufeinanderfolgende Operationen des vorübergehenden Speicherns und Lesens (in M1, M2), gefolgt durch einen Multiplexiervorgang (in MX1), aufgebaut wird; daß die Schaltmatrix (SW) an Bord des Satelliten mit einer Wiederholungsperiode gleich der Dauer des Überrahmens adressiert wird; und daß zur Wiederherstellung der PCM-Ströme die Gruppen von Kanälen am Ausgang der empfangenden TDMA-Endstelle (TDMA$_R$) durch auf-einanderfolgende Operationen des vorüber-gehenden Speicherns und Lesens (in M3, M4), gefolgt durch einen Multiplexiervorgang (in MX2), neugeordnet werden.

2. Verfahren nach Anspruch 1, dadurch gekennzeichnet, daß zum Bestimmen des genauen Sendezeitpunkts ein entsprechendes Binärpaket (von GP) durch den Multiplexiervorgang (in MX1) in den binären Strom am Eingang (4) der sendenden TDMA-Endstelle (TDMA$_T$) durch Verwendung einer Rahmeneinheit eingesetzt und zur sendenden Station (TDMA$_T$) geschaltet wird.

3. System zum Ausführen des Verfahrens nach Anspruch 1 oder 2, mit einem Satelliten (SA) und einer Mehrzahl von Erdstationen (STA, STB), die mit dem Stelliten über TDMA-Sendeverbindungen (9—14) kommunizieren, wobei der Satellit eine Schaltmatrix zum Schalten der zu verbindenden Kanäle aufweist und die Erdstationen sendende und empfangende TDMA-Erd-End-stellen (TDMA$_T$, TDMA$_R$) umfassen, von denen die sendenden Erd-Endstellen Ströme von PCM-kodierten Abtastwerten (auf 1, 2), die in PCM-Rahmen organisiert sind, empfangen und sie in anders geordnete Ströme von Abtastwerten umwandeln, in denen die Abtastwerte jedes Rahmens, die zu einer gegebenen Periode gehören, zu zusammenhängenden Blöcken innerhalb eines TDMA-Rahmens zusammengefaßt werden, und von denen die empfangenden Erd-Endstellen eine komplementäre Umsetzung durchführen, dadurch gekennzeichnet, daß an den Erdstationen (STA, STB) eine Mehrzahl erster Speichervorrichtungen (M1, M2) vorhanden ist, die die Abtastwerte eines ankommenden PCM-Stroms speichern und sie zu entsprechenden Zeitpunkten auf Befehl durch einé erste Steuer-logik (LC1) an einen ersten Multiplexer (MX1) abgeben, der ausgangsseitig einen ersten Binärstrom abgibt, der zusammen mit üblichen PCM-Strömen dem Eingang (4) der sendenden TDMA-Endstelle (TDMA$_T$) eingespeist wird, und weiterhin eine Mehrzahl zweiter Speichervorrichtungen (M3, M4) vorhanden ist, die die Abtastwerte eines zweiten binären Stroms speichern, der am Ausgang (5, 6, 7) der empfangenden TDMA-Endstelle (TDMA$_R$) auftritt, und sie zu entsprechenden Zeitpunkten auf Befehl eine zweiten Steuerlogik (LC2) an einen zweiten Multiplexer (MX2) abgeben, der ausgangsseitig einen abgehenden PCM-Strom liefert, wobei die erste Steuerlogik (LC1) ein alternierendes Lesen und Schreiben in den ersten Speichervorrichtungen (M1, M2) mit komplementären Modalitäten zu den von der zweiten Steuerlogik (LC2) angewandten Modalitäten beim Befahlen des Lesens und Schreibens in den zweiten Speichervorrichtungen (M3, M4) bewirkt.

4. System nach Anspruch 3, dadurch gekennzeichnet, daß an der Erdstation (STA, STB) ein Folgegenerator (GP) vorhanden ist, der in den ersten Multiplexer (MX1) ein entsprechendes binäres Paket, das in den ersten Binärstrom einzufügen ist, liefert, sowie ein Detektor (RP) für dieses Paket vorhanden ist, der dieses binäre Paket aus dem zweiten binären Strom (auf 7) extrahiert und so die erzielte Überrahmensynchronisation zwischen dem Satelliten und der Zeitsteuerung der Erdstation bestätigt.

5. System nach Anspruch 3 oder 4, dadurch gekennzeichnet, daß sich an Bord des Satelliten zusätzliche Adressierspeichervorrichtungen (MA) zum Adressieren der Schaltmatrix (SW) mit einer Wiederholungsperiode gleich der Überrahmenperiode befinden, die durch einen Überrahmenzähler (CST) gesteuert werden, der durch ein Signal mit einer Periode gleich der Rahmenzeit getaktet und durch ein Synchronismussignal synchronisiert wird, wobei diese beiden Signale an Bord des Satelliten erzeugt werden.

## Revendications

1. Procédé pour l'accès multiple par répartition temporelle (AMRT) à un satellite avec commutation à bord pour le trafic par satellite (SA) entre des stations terriennes (STA, STB) ayant de nombreuses relations de trafic dont chacune peut être très limitée, et fournies de terminaux émetteurs AMRT (TDMA$_T$) capables de recevoir des flux d'échantillons codés en MIC (sur 1, 2) organisés en trames MIC, dont chacune a lieu pendant une période de temps de 125 μs et contient 32 voies, et capables aussi de convertir lesdits flux d'échantillons dans un flux de trames AMRT de 2 ms en réordonnant les voies présentes en 16 trames MIC consécutives, qui occupent 2 ms, de manière que les échantillons des voies de trames consécutives entre ladite période de temps de 2 ms soient organisées telles qu'un bloc contigu, qui contient seulement la voie respective, de manière à engendrer les trames AMRT de 2 ms, dont chacune est associé à une relation de trafic et est employée pour la liaison montante vers le satellite (9), et fournies en outre de terminaux de réception (TDMA$_R$) capables d'effectuer des traitements complémentaires de ceux exécutés par les terminaux AMRT émetteurs, le satellite recevant des liaisons montantes (9, 11, 12) provenant des stations AMRT émettrices, commutant les voies à l'aide d'une matrice de commutation (SW) et transmettant des liaisons déscendantes (10, 13, 14) vers les terminaux AMRT de réception, caractérisé en ce que de tous ou de partie des flux d'échantillons codés en MIC (sur 3), avant de les fournir au respectif terminal AMRT de transmission (TDMA$_T$), l'on engendre une supertrame (Fig. 4c) qui comprend les échantillons des trames MIC contenus dans un nombre n=32, 16, 8, 4 ou 2 de trames de 2 ms qui correspond aux trames AMRT, chacune des trames de 2 ms entre la supertrame comprend des groupements de 32/n voies ayant chacune n · 16 échantillons MIC, ladite supertrame étant engendrée en réodonnant les échantillons de n · 16 trames MIC à l'aide d'opérations successives de stockage temporaire et de lecture (en M1, M2), suivies par une opération de multiplexage (en MX1); caractérisé de même en ce qu'au bord du satellite la matrice de commutation (SW) est adressée avec une période de répétition égale à la durée de la supertrame; caractérisé enfin en ce que pour recouvrer des flux MIC lesdits groupement de voies à la sortie du terminal AMRT de réception (TDMA$_R$) sont réordonnés à l'aide d'opérations successives de stockage temporaire et de lecture (en M3, M4) suivies d'une opération de démultiplexage (en MX2).

2. Procédé suivant la revendication 1, caractérisé en ce que pour déterminer l'instant exact de transmission un convenable paquet binaire (en provenance de GP) est inséré dans le flux binaire par ladite opération de multiplexage (en MX1) à l'entrée (4) du terminal AMRT de transmission (TDMA$_T$) en employant une unité de trame et est commuté vers la station émettrice (TDMA$_T$).

3. Système pour réaliser le procédé suivant les revendications 1 ou 2, qui comprend un satellite (SA) et une pluralité de stations terriennes (STA, STB) qui communiquant avec le satellite à l'aide des liaisons de transmission AMRT (9—14), le satellite comprenant une matrice pour commuter les voies à connecter, les stations terriennes comprenant des terminaux terriens de transmission et réception (TDMA$_T$, TDMA$_R$), les terminaux terriens de transmission étant capables de recevoir des flux d'échantillons codés en MIC (sur 1, 2) organisés en trames MIC qu'il convert en des flux organisés selon un ordre différent des échantillons, où les échantillons de chaque trame, qui appartiennent à une certaine période, sont réunis en des blocs contigus dans une trame AMRT et les terminaux terriens de réception étant aptes à effectuer une conversion complémentaire, caractérisé en ce que les stations terriennes (STA, STB) comprennent une pluralité de premiers dispositifs de mémoire (M1, M2), aptes à mémoriser les échantillons d'un flux MIC entrant et à les fournir dans des instants convenables, d'après la commande d'une première logique de contrôle (LC1), à un premier multiplexeur (MX1), qui rend disponible à sa sortie un premier flux binaire à envoyer avec les flux MIC standardisés à l'entrée (4) du terminal AMRT de transmission (TDMA$_T$), es deuxièmes dispositifs de mémoire (M3, M4) étant de même prévus pour mémoriser les échantillons d'un deuxième flux binaire présent à la sortie (5, 6, 7) du terminal AMRT de réception (TDMA$_R$) et à les fournir dans des instants convenables, d'après la commande d'une deuxième logique de contrôle (LC2), à un deuxième multiplexeur (MX2) qui rend disponible à sa sortie un flux MIC sortant, la première logique de contrôle (LC1) permettant auxdits premiers dispositifs de mémoire (M1, M2) d'être les et écrits alternativement et suivant des modalités complémentaires de celles employées par la deuxième logique de contrôle (LC2) pour commander l'écriture et la lecture dans lesdits deuxièmes dispositifs de mémoire (M3, M4).

4. Système suivant la revendication 3, caractérisé en ce que la station terrienne (STA, STB) comprend un générateur de séquence (CP), apte à fournir audit premier multiplexeur (MX1) un convenable paquet binaire à insérer dans ledit premier flux binaire, et un détecteur dudit paquet (RP), apte à extraire ledit paquet binaire dudit deuxième flux binaire (sur 7), de manière à détecter les conditions de synchronisme de supertrame entre les rythmes du satellite et ceux de la station terrienne.

5. Système suivant les revendications 3 et 4, caractérisé en ce qu'au bord du satellite 11 y a des dispositifs du mémoire d'adressage supplémentaires (MA), pour adresser la matrice de commutation (SW) avec une période de répétition égale à la supertrame, lesquels sont commandés par un compteur de supertrame (CST), rythmé par un signal ayant une période égale au temps de trame et synchronisé par un signal de synchronisme, étant tous les deux engendrés au bord du satellite.

Fig. 1

0 053 399

Fig.2

Fig. 3

frame unit 2 ms
2 Mbit/s CCITT PCM

125 μs

1     2     3     15     16

Fig. 4a

1st channel    2nd channel    32nd channel

Fig. 4b

superframe
32 ms

256·8 bits

0 1 2 3 4 5 ... 30 31

2 ms

TDMA frame

Fig. 4c

3